# EUROPÄISCHE PATENTANMELDUNG

(11) **EP 1 162 105 A2**
(43) Veröffentlichungstag der Anmeldung: **12.12.2001**
(21) Anmeldenummer: 01110923.8
(22) Anmeldetag: 05.05.2001
(51) Int. Cl.: B60L 9/30, H02M 5/458

(54) **Stromrichterschaltung und Verfahren zur Ankopplung an ein elektrisches Versorgungsnetz**

(30) Priorität: 10.06.2000 DE 10028920
(71) Anmelder: DaimlerChrysler Rail Systems GmbH, 13627 Berlin (DE)
(72) Erfinder: Oberti, Maurizio, 8127 Forch (CH)
(74) Vertreter: Thielmann, Andreas

(57) **Zusammenfassung**

Es wird eine Stromrichterschaltung zur Ankopplung an ein elektrisches Versorgungsnetz angegeben, die mindestens ein aus einem ersten und zweiten Teilstromrichter (5.1; 5.2) aufgebautes Teilstromrichtersystem aufweist und bei der zwischen einem ersten Anschluss (9.11) eines ersten Gleichspannungszwischenkreises (14.1) und einem ersten Anschluss (9.21) eines zweiten Gleichspannungszwischenkreises (14.2) sowie zwischen einem zweiten Anschluss (9.12) des ersten Gleichspannungszwischenkreises (14.1) und einem zweiten Anschluss (9.22) des zweiten Gleichspannungszwischenkreises (14.2) jeweils ein Konfigurationsschalter (10.1; 10.2) vorgesehen ist. Zudem ist zwischen dem zweiten Anschluss (9.12) des ersten Gleichspannungszwischenkreises (14.1) und dem ersten Anschluss (9.21) des zweiten Gleichspannungszwischenkreises (14.2) ein Trennschalter (11) vorgesehen. Weiterhin wird ein Verfahren zur Ankopplung an ein elektrisches Versorgungsnetz angegeben.

## Beschreibung

### Technisches Gebiet

Die Erfindung bezieht sich auf das Gebiet der Leistungselektronik. Sie geht aus von einer Stromrichterschaltung und einem Verfahren zur Ankopplung an ein elektrisches Versorgungsnetz gemäss dem Oberbegriff der unabhängigen Ansprüche.

### Stand der Technik

Schienenfahrzeuge für Mehrsystemanwendungen, insbesondere im länderübergreifenden Einsatz, müssen ihre Antriebsenergie aus Gleichspannungsnetzen und Wechselspannungsnetzen unterschiedlicher Netzspannung entnehmen. Dazu sind Stromrichterschaltungen nötig, die sowohl an ein Gleichspannungsnetz als auch an ein Wechselspannungsnetz ankoppelbar sind, um gängige Traktionsantriebe mit Energie zu versorgen. Eine solche Stromrichterschaltung ist in der DE 196 09 550 A1 angegeben. Die Stromrichterschaltung weist zwei Stromrichter auf, wobei der erste Stromrichter über einen netzseitigen Transformator mit einem Wechselspannungsnetz verbunden ist. Der zweite Stromrichter ist wechselspannungsseitig an eine elektrische Anlage oder an einen elektrischen Verbraucher, insbesondere an mindestens einen elektrischen Motor, angeschlossen. Beide Stromrichter der Stromrichterschaltung sind über ihre Gleichspannungsanschlüsse an einen Gleichspannungszwischenkreis angeschlossen, der mindestens einen Zwischenkreiskondensator als Energiespeicher aufweist. Darüberhinaus ist der Gleichspannungszwischenkreis bei einer Versorgung der Stromrichterschaltung mit Energie aus einem Gleichspannungsnetz mit diesem Gleichspannungsnetz verbunden.

Die Stromrichterschaltung nach DE 196 09 550 A1 muss jeweils für einen Betrieb an einem Gleichspannungsnetz als auch an einem Wechselspannungsnetz für das gewählte Versorgungsnetz separat konfiguriert werden. Dazu sind wechselspannungsseitig zwischen Transformator und dem ersten Stromrichter erste Trennschalter und zwischen dem zweiten Stromrichter und dem elektrischen Verbraucher zweite Trennschalter vorgesehen. Durch entsprechendes Öffnen und Schliessen der entsprechenden Trennschalter im stromlosen Zustand der Schaltung ist die Stromrichterschaltung sowohl an ein Gleichspannungsnetz als auch an ein Wechselspannungsnetz ankoppelbar, wobei beim Betrieb der Stromrichterschaltung an einem Gleichspannungsnetz der Verbraucher durch den ersten und zweiten Stromrichter, die beide als Wechselrichter betrieben werden, gespeist werden. Beim Betrieb der Stromrichterschaltung an einem Wechselspannungsnetz wird der erste Stromrichter als Netzstromrichter betrieben, der den Gleichspannungszwischenkreis mit Energie versorgt und aus dem dann der zweite Stromrichter den Verbraucher speist.

Problematisch bei einer solchen Stromrichterschaltung ist, dass eine Vielzahl von Trennschaltern notwendig ist, deren Schalterstellung bei einem Wechsel des Versorgungsnetzes, z.B. von einem Gleichspannungsnetz auf ein Wechselspannungsnetz, neu konfiguriert werden muss. Diese grosse Anzahl an Trennschaltern verursacht jedoch erhebliche Bauteilkosten und benötigt viel Platz, wobei gerade bei Stromrichterschaltungen für Traktionsanwendungen in einem elektrischen Schienenfahrzeug das Platzangebot äusserst beschränkt ist. Zudem muss die Funktion der Trennschalter, insbesondere durch intensive Wartung der Trennschalter selbst sowie durch deren Ansteuerung, sichergestellt sein, da ein Fahrzeugausfall infolge einer unzureichenden Konfiguration der Stromrichterschaltung durch die Trennschalter zu einer weiteren Kostenerhöhung führt.

### Darstellung der Erfindung

Aufgabe der Erfindung ist es deshalb, eine Stromrichterschaltung und ein Verfahren zur Ankopplung an ein elektrisches Versorgungsnetz anzugeben, so dass ein sehr einfacher und besonders platzsparender Aufbau der Stromrichterschaltung für eine Ankopplung an ein elektrisches Versorgungsnetz ermöglicht wird und dass mit einem Minimum an wartungsintensiven Bauteilen ausgekommen werden kann, sowie ein Verfahren anzugeben, mit dem die Ankopplung an ein elektrisches Versorgungsnetz in besonders einfacher Weise durchgeführt wird. Diese Aufgabe wird durch die Merkmale der unabhängigen Ansprüche gelöst. In den Unteransprüchen sind vorteilhafte Weiterbildungen der Erfindung angegeben.

Die erfindungsgemässe Stromrichterschaltung weist ein Minimum an Schaltern auf, mit denen es möglich ist, die Stromrichterschaltung an ein Wechselspannungsnetz oder an ein Gleichspannungsnetz anzukoppeln. Zudem umfasst die Stromrichterschaltung mindestens ein Teilstromrichtersystem mit jeweils einem ersten Teilstromrichter und einem zweiten Teilstromrichter, wobei der erste Teilstromrichter gleichspannungsseitig an einen ersten und einen zweiten Anschluss eines ersten Gleichspannungszwischenkreises und der zweite Teilstromrichter gleichspannungsseitig an einen ersten und einen zweiten Anschluss eines zweiten Gleichspannungszwischenkreises angeschlossen ist. Erfindungsgemäss ist zwischen dem ersten Anschluss des ersten Gleichspannungszwischenkreises und dem ersten Anschluss des zweiten Gleichspannungszwischenkreises sowie zwischen dem zweiten Anschluss des ersten Gleichspannungszwischenkreises und dem zweiten Anschluss des zweiten Gleichspannungszwischenkreises jeweils ein Konfigurationsschalter vorgesehen. Weiterhin ist erfindungsgemäss zwischen dem zweiten Anschluss des ersten Gleichspannungszwischenkreises und dem ersten Anschluss des zweiten Gleichspannungszwischenkreises ein Trennschalter vorgesehen.

Somit ist ein sehr einfacher und besonders platzsparender Aufbau der Stromrichterschaltung erreicht. Zusätzlich kann mit der erfindungsgemässen Stromrichterschaltung der Einsatz an wartungsintensiven Bauteilen, insbesondere an Schaltern, auf ein Minimum reduziert werden.

Vorteilhaft werden erfindungsgemäss bei einer Ankopplung an ein Wechselspannungsnetz die Konfigurationsschalter und der Trennschalter geöffnet, so dass die jeweiligen Gleichspannungszwischenkreise sehr einfach derart geschaltet werden können, dass zwischen den Gleichspannungszwischenkreisen keine unmittelbare Verbindung besteht. Weiterhin werden bei einer Ankopplung an ein Gleichspannungsnetz die Gleichspannungszwischenkreise derart geschalten, dass zwischen den Gleichspannungszwischenkreisen eine unmittelbare Verbindung besteht, wobei es äusserst einfach je nach Anforderung möglich ist, die Gleichspannungszwischenkreise in Serie oder parallel zu schalten.

Ein kompliziertes Verfahren zur Ankopplung der Stromrichterschaltung, insbesondere aufwendige Konfigurationen einer grossen Anzahl an Schaltern, wird somit vermieden.

Durch die geringe Anzahl an Schaltern ist darüberhinaus eine äusserst einfache und flexible Ankopplung an verschiedenste Versorgungsnetze möglich, ohne dass zusätzliche Schaltungskomponenten der Stromrichterschaltung beispielsweise bei einem Versorgungsnetzwechsel zu- oder abgeschaltet werden müssen.

Diese und weitere Aufgaben, Vorteile und Merkmale der vorliegenden Erfindung werden aus der nachfolgenden detaillierten Beschreibung eines bevorzugten Ausführungsbeispiels der Erfindung in Verbindung mit der Zeichnung offensichtlich.

### Kurze Beschreibung der Zeichnungen

Nachfolgend wird die Erfindung anhand eines Ausführungsbeispiels im Zusammenhang mit der Zeichnung näher erläutert.

Es zeigen:
- **Fig. 1**: eine Ausführungsform einer Stromrichterschaltung zur Ankopplung an ein elektrisches Versorgungsnetz und
- **Fig. 2**: ein Ablaufdiagramm eines Verfahrens zur Ankopplung an ein elektrisches Versorgungsnetz.

Grundsätzlich sind in den Figuren gleiche Teile mit gleichen Bezugszeichen versehen.

### Wege zur Ausführung der Erfindung

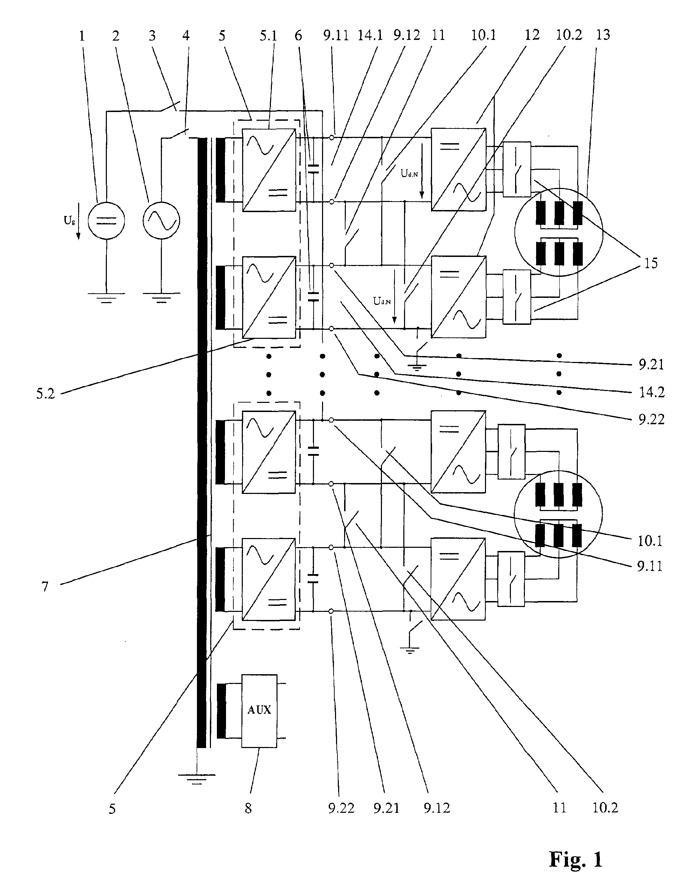

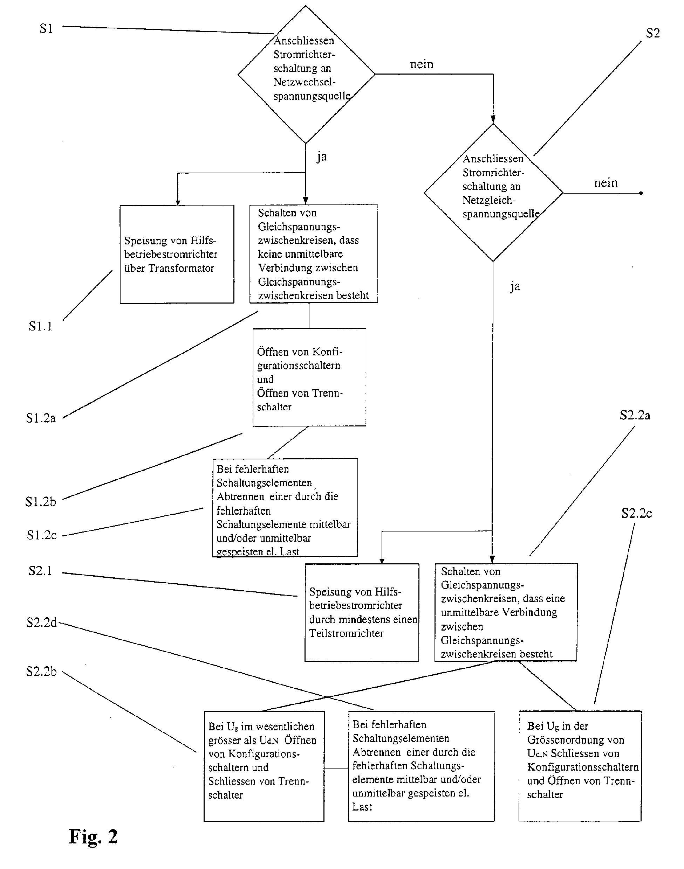

Fig. 1 zeigt eine Ausführungsform einer Stromrichterschaltung zur Ankopplung an ein elektrisches Versorgungsnetz. Weiterhin ist in Fig. 2 ein Ablaufdiagramm des erfindungsgemässen Verfahrens zur Ankopplung an ein elektrisches Versorgungsnetz gezeigt. Gemäss Fig. 1 umfasst die Stromrichterschaltung mindestens ein aus einem ersten Teilstromrichter 5.1 und einem zweiten Teilstromrichter 5.2 aufgebautes Teilstromrichtersystem 5. Jeder Teilstromrichter 5.1, 5.2 ist mit seinen Wechselspannungsanschlüssen mit jeweils einer Wicklung eines an eine Netzwechselspannungsquelle 2 anschliessbaren Transformators 7 verbunden. Bei einem Anschluss der Stromrichterschaltung an die Netzwechselspannungsquelle 2 wird der Transformator über einen Wechselspannungsnetzschalter 4 an die Netzwechselspannungsquelle 2 angeschlossen. Der erste Teilstromrichter 5.1 ist gleichspannungsseitig an einen ersten Anschluss 9.11 und an einen zweiten Anschluss 9.12 eines ersten Gleichspannungszwischenkreises 14.1 angeschlossen. Weiterhin ist der zweite Teilstromrichter 5.2 gleichspannungsseitig an einen ersten Anschluss 9.21 und an einen zweiten Anschluss 9.22 eines zweiten Gleichspannungszwischenkreises 14.2 angeschlossen.

Gemäss Fig. 1 weist der erste Gleichspannungszwischenkreis 14.1 und der zweite Gleichspannungszwischenkreis 14.2 jeweils einen Zwischenkreiskondensator 6 als Energiespeicher auf. Weitere Gleichspannungszwischenkreiselemente, wie Entladevorrichtungen und/oder Filterelemente zur Reduzierung oder Elimination von Oberschwingungen in der Zwischenkreisspannung, sind gängigerweise zusätzlich, je nach Anforderungen an die Stromrichterschaltung, vorgesehen, aber der Übersichtlichkeit wegen nicht eingezeichnet. Zusätzlich ist an einen der beiden Gleichspannungszwischenkreise 14.1, 14.2 eine Netzgleichspannungsquelle 1 anschliessbar, wobei der Anschluss der Stromrichterschaltung an diese Netzgleichspannungsquelle 1 über einen Gleichspannungsnetzschalter 3 erfolgt.

Gemäss Fig. 1 ist erfindungsgemäss zwischen dem ersten Anschluss 9.11 des ersten Gleichspannungszwischenkreises 14.1 und dem ersten Anschluss 9.21 des zweiten Gleichspannungszwischenkreises 14.2 sowie zwischen dem zweiten Anschluss 9.12 des ersten Gleichspannungszwischenkreises 14.1 und dem zweiten Anschluss 9.22 des zweiten Gleichspannungszwischenkreises 14.2 jeweils ein Konfigurationsschalter 10.1, 10.2 vorgesehen. Weiterhin ist erfindungsgemäss zwischen dem zweiten Anschluss 9.12 des ersten Gleichspannungszwischenkreises 14.1 und dem ersten Anschluss 9.21 des zweiten Gleichspannungszwischenkreises 14. 2 ein Trennschalter 11 vorgesehen. Die Konfigurationsschalter 10.1, 10.2 und der Trennschalter 11 sind vorzugsweise mechanisch oder als elektronische Schalter ausgeführt. Durch die beiden Konfigurationsschalter 10.1, 10.2 und den Trennschalter 11 kommt die Stromrichterschaltung mit einem Minimum an wartungsintensiven Bauteilen aus und ist zudem besonders einfach und platzsparend ausgeführt.

Gemäss Fig. 2 werden erfindungsgemäss beim bereits erwähnten (S1). Anschluss der Stromrichterschaltung an die Netzwechselspannungsquelle 2 die beiden Gleichspannungszwischenkreise 14.1, 14.2 des Teilstromrichtersystems 5 derart geschalten, dass zwischen den Gleichspannungszwischenkreisen 14.1, 14.2 keine unmittelbare Verbindung besteht (S1.2a). Dazu werden die Konfigurationsschalter 10.1, 10.2 und der Trennschalter geöffnet (S1.2b), so dass eine einfache Ankopplung an das entsprechende Wechselspannungsnetz erfolgt. Zudem ist zwischen dem ersten Anschluss 9.11, 9.21 und dem zweiten Anschluss 9.12, 9.22 des zugehörigen Gleichspannungszwischenkreises 14.1, 14.2 mindestens ein Laststromrichter angeschlossen. Somit wird eine symmetrische Speisung einer mit dem Lastromrichter 12 verbundenen elektrischen Last 13 , insbesondere einer dreiphasigen Teilwicklung einer rotierenden elektrischen Maschine, ermöglicht, ohne dass aufwendige Anpassungen beziehungsweise Konfigurationen der Stromrichterschaltung an die elektrische Last 13 erfolgen müssen.

Ferner ist am Transformator 7 gemäss Fig. 1 mindestens eine Wicklung mit daran jeweils mindestens einem angeschlossenen Hilfsbetriebestromrichter 8, der beispielsweise eine Klimaanlage und Lüfter in einem elektrischen Schienenfahrzeug speist, vorgesehen, der beim (S1) Anschluss der Stromrichterschaltung an die Netzwechselspannungsquelle 2 durch diese über den Transformator 7 gespeist wird (S1.1). Dadurch entfällt vorteilhaft ein zusätzlicher den Hilfsbetriebestromrichter 8 speisender Transformator.

Gemäss Fig. 2 werden beim bereits erwähnten (S2) Anschluss der Stromrichterschaltung an die Netzgleichspannungsquelle 1 die beiden Gleichspannungszwischenkreise 14.1, 14.2 des Teilstromrichtersystems 5 erfindungsgemäss derart geschalten, dass eine unmittelbare Verbindung zwischen den Gleichspannungszwischenkreisen besteht. (S2.2a). Bei einer Netzgleichspannung (U_{g}) wesentlich grösser als die Nennzwischenkreisspannung (U_{d,N}) der Gleichspannungszwischenkreise 14.1, 14.2 werden dazu die Konfigurationsschalter 10.1, 10.2 geöffnet (S2.2b) und der Trennschalter 11 geschlossen (S2.2b), so dass eine einfache Ankopplung an das entsprechende Gleichspannungsnetz durch Serienschalten der beiden Gleichspannungszwischenkreise 14.1, 14. 2 erfolgt. Vorzugsweise findet die Serienschaltung der beiden Gleichspannungszwischenkreise 14.1, 14. 2 bei einer Netzgleichspannung (U_{g}) in der Grössenordnung der zweifachen Nennzwischenkreisspannung (U_{d,N}) statt. Zusätzlich wird jeder zwischen dem ersten Anschluss 9.11, 9.21 und dem zweiten Anschluss 9.12, 9.22 des zugehörigen Gleichspannungszwischenkreises 14.1, 14.2 angeschlossene Laststromrichter 12 durch das Serienschalten der beiden Gleichspannungszwischenkreise 14.1, 14. 2 ebenfalls in Serie geschaltet. Durch die Serienschaltung der beiden Gleichspannungszwischenkreise 14.1, 14.2 und der jeweils damit verbundenen Teilstromrichter 5.1, 5.2 und Laststromrichter 12 teilt sich der Wert der Zwischenkreisspannung des jeweiligen Zwischenkreiskondensators 6 entsprechend den Werten des zugehörigen Zwischenkreiskondensators 6 auf. Dadurch ergibt sich äusserst vorteilhaft, dass, insbesondere bei Netzgleichspannungen (U_{g}) grösser oder gleich 3 kV, Stromrichterventile mit einem gängigen zugelassenen Sperrspannungswert sowohl in den Laststromrichtern 12 als auch in den Teilstromrichtern 5.1, 5.2 verwendet werden können, da an den Laststromrichtern 12 und an den Teilstromrichtern 5.1, 5.2 die entsprechend aufgeteilten Zwischenkreisspannungswerte anliegen.

Weiterhin werden erfindungsgemäss bei einer Netzgleichspannung (U_{g}) in der Grössenordnung der Nennzwischenkreisspannung (U_{d,N}) der Gleichspannungszwischenkreise 14.1, 14.2 die Konfigurationsschalter 10.1, 10.2 geschlossen (S2.2c) und der Trennschalter 11 geöffnet (S2.2c), so dass eine sehr einfache Ankopplung an das entsprechende Gleichspannungsnetz durch Parallelschalten der beiden Gleichspannungszwischenkreise 14.1, 14.2 erfolgt. Zusätzlich wird jeder zwischen dem ersten Anschluss 9.11, 9.21 und dem zweiten Anschluss 9.12, 9.22 des zugehörigen Gleichspannungszwischenkreises 14.1, 14.2 angeschlossene Laststromrichter 12 durch das Parallelschalten der beiden Gleichspannungszwischenkreise 14.1, 14.2 ebenfalls parallel geschaltet.

Der am Transformator 7 angeschlossene Hilfsbetriebestromrichter 8 wird gemäss Fig. 2 beim (S2) Anschluss der Stromrichterschaltung an die Netzgleichspannungsquelle 1 durch mindestens einen Teilstromrichter 5.1, 5.2 gespeist (S2.1). Diese Speisung erfolgt bevorzugt über mindestens eine Wicklung des Transformators 7, wodurch der Hilfsbetriebestromrichter 8 mit mindestens einem Teilstromrichter 5.1, 5.2 in mittelbarer Verbindung steht. Der Hilfsbetriebestromrichter 8 steht somit über die Wicklung des Transformators 7 mit mindestens einem Teilstromrichter 5.1, 5.2 elektromagnetisch in Verbindung. Wie schon beim Anschluss der Stromrichterschaltung an die Netzwechselspannungsquelle 2, entfällt der zusätzliche den Hilfsbetriebestromrichter 8 speisende Transformator und eine weitere Einrichtung, beispielsweise in der Art eines Wechselrichters, die die Netzgleichspannung (U_{g}) der Netzgleichspannungsquelle 1 wechselrichtet und den besagten zusätzlichen Transformator speist.

Darüberhinaus speist der Lastromrichter 12 gemäss Fig. 1 die als dreiphasige Teilwicklung einer rotierenden elektrischen Maschine ausgeführte elektrischen Last 13. Tritt ein Fehler in der Stromrichterschaltung, insbesondere Fehler in den Schaltungselementen der Stromrichterschaltung, wie beispielsweise im Teilstromrichter 5.1, 5.2, im Gleichspannungszwischenkreis 14.1, 14.2 oder im Laststromrichter 12, auf, so wird die von den fehlerhaften Schaltungselementen mittelbar und/oder unmittelbar gespeiste elektrische Last 13 erfindungsgemäss abgetrennt. Diese Abtrennung erfolgt gemäss Fig. 2 bei Auftreten der vorstehend beschriebenen Fehler bei Anschluss der Stromrichterschaltung an die Netzwechselspannungsquelle 2 (S1.2c) oder bei Anschluss der Stromrichterschaltung an die Netzgleichspannungsquelle 1, falls die Netzgleichspannung (U_{g}) in der Grössenordnung der Nennzwischenkreisspannung (U_{d,N}) ist (S2.2d). Für die Abtrennung der elektrischen Last 13, insbesondere einer als dreiphasige Teilwicklung einer rotierenden elektrischen Maschine ausgeführten elektrischen Last 13, ist zwischen dem Laststromrichter 12 und der dreiphasigen Teilwicklung ein dreiphasiger Abtrennschalter 15 gemäss Fig. 1 angeordnet. Liegt ein vorstehend beschriebener Fehler in den die elektrische Last 13 mittelbar und/oder unmittelbar speisenden Schaltungselementen vor, so wird durch Öffnen des dreiphasigen Abtrennschalters 15 die elektrische Last 13 abgetrennt. Insbesondere bei einer Anwendung der Stromrichterschaltung in einem Schienenfahrzeug kann das Fahrzeug nach der Abtrennung der dreiphasigen Teilwicklung einer beispielsweise als Antriebsmotor eingesetzten rotierenden elektrischen Maschine noch aus eigener Kraft bewegt werden, da weiterhin eine Speisung einer weiteren Teilwicklung der rotierenden elektrischen Maschine von den nichtfehlerhaften Schaltungselementen der Stromrichterschaltung erfolgt. Zudem kann durch die Abtrennung vorteilhaft eine Fehlerfortpflanzung auf nichtfehlerhafte Schaltungselemente erfolgreich unterbunden werden.

Insgesamt stellt die erfindungsgemässe Stromrichterschaltung eine äusserst kostengünstige Lösung dar, da ein Minimum an Bauteilen, insbesondere an Schaltern eingesetzt wird und somit aufwendige Wartungsarbeiten der Schalter minimiert werden können sowie eine einfache Ansteuerung der Schalter vorgesehen werden kann. Zudem ist durch das erfindungsgemässe Verfahren eine einfache und flexible Ankopplung an verschiedenste Versorgungsnetze, insbesondere an Gleichspannungsnetze variabler Spannungswerte und an Wechselspannungsnetze variabler Spannungs- und Frequenzwerte möglich, ohne dass zusätzliche Schaltungskomponenten der Stromrichterschaltung beispielsweise bei einem Versorgungsnetzwechsel zu- oder abgeschaltet werden müssen.

## Patentansprüche

1. Stromrichterschaltung zur Ankopplung an ein elektrisches Versorgungsnetz mit mindestens einem aus einem ersten und zweiten Teilstromrichter (5.1; 5.2) aufgebauten Teilstromrichtersystem (5), wobei jeder Teilstromrichter (5.1; 5.2) wechselspannungsseitig mit jeweils einer Wicklung eines an eine Netzwechselspannungsquelle (2) anschliessbaren Transformators (7) verbunden ist und der erste Teilstromrichter (5.1) gleichspannungsseitig an einen ersten und einen zweiten Anschluss (9.11; 9.12) eines ersten Gleichspannungszwischenkreises (14.1) und der zweite Teilstromrichter (5.2) gleichspannungsseitig an einen ersten und einen zweiten Anschluss (9.21; 9.22) eines zweiten Gleichspannungszwischenkreises (14.2) angeschlossen ist und einer der beiden Gleichspannungszwischenkreise (14.1; 14.2) an eine Netzgleichspannungsquelle (1) anschliessbar ist, **dadurch gekennzeichnet, dass** zwischen dem ersten Anschluss (9.11) des ersten Gleichspannungszwischenkreises (14.1) und dem ersten Anschluss (9.21) des zweiten Gleichspannungszwischenkreises (14.2) und zwischen dem zweiten Anschluss (9.12) des ersten Gleichspannungszwischenkreises (14.1) und dem zweiten Anschluss (9.22) des zweiten Gleichspannungszwischenkreises (14.2) jeweils ein Konfigurationsschalter (10.1; 10.2) vorgesehen ist und dass zwischen dem zweiten Anschluss (9.12) des ersten Gleichspannungszwischenkreises (14.1) und dem ersten Anschluss (9.21) des zweiten Gleichspannungszwischenkreises (14.2) ein Trennschalter (11) vorgesehen ist.

2. Stromrichterschaltung nach Anspruch 1, **dadurch gekennzeichnet, dass** die Konfigurationsschalter (10.1; 10.2) mechanisch oder als elektronische Schalter ausgeführt sind.

3. Stromrichterschaltung nach Anspruch 1, **dadurch gekennzeichnet, dass** der Trennschalter (11) mechanisch oder als elektronischer Schalter ausgeführt ist.

4. Stromrichterschaltung nach Anspruch 1, **dadurch gekennzeichnet, dass** zwischen dem ersten und zweiten Anschluss (9.11; 9.12; 9.21; 9.22) des zugehörigen Gleichspannungszwischenkreises (14.1; 14.2) mindestens ein Laststromrichter (12) angeschlossen ist.

5. Stromrichterschaltung nach Anspruch 4, **dadurch gekennzeichnet, dass** der Laststromrichter (12) wechselspannungsseitig mit einer elektrischen Last (13) verbunden ist.

6. Stromrichterschaltung nach Anspruch 5, **dadurch gekennzeichnet, dass** die elektrische Last (13) eine dreiphasige Teilwicklung einer rotierenden elektrischen Maschine ist.

7. Stromrichterschaltung nach Anspruch 6, **dadurch gekennzeichnet, dass** zwischen der dreiphasigen Teilwicklung und dem Antriebsstromrichter (12) ein dreiphasiger Abtrennschalter (15) angeordnet ist.

8. Stromrichterschaltung nach Anspruch 1, **dadurch gekennzeichnet, dass** mindestens ein mit mindestens einem Teilstromrichters (5.1; 5.2) mittelbar verbundener Hilfsbetriebestromrichter (8) vorgesehen ist.

9. Stromrichterschaltung nach Anspruch 8, **dadurch gekennzeichnet, dass** der Hilfsbetriebstromrichter (8) über mindestens eine Wicklung des Transformator (7) mit mindestens einem Teilstromrichter (5.1; 5.2), insbesondere elektromagnetisch, verbunden ist.

10. Verfahren zur Ankopplung an ein elektrisches Versorgungsnetz, mit den Schritten
(S1) Anschliessen einer Netzwechselspannungsquelle (2) über einen Wechselspannungsnetzschalter (4) an einen Transformator (7) an eine Stromrichterschaltung, wobei die Stromrichterschaltung mindestens ein aus einem ersten und zweiten Teilstromrichter (5.1; 5.2) aufgebauten Teilstromrichtersystem (5) aufweist und jeder Teilstromrichter (5.1; 5.2) wechselspannungsseitig mit dem Transformators (7) verbunden ist und der erste Teilstromrichter (5.1) gleichspannungsseitig an einen ersten und einen zweiten Anschluss (9.11; 9.12) eines ersten Gleichspannungszwischenkreises (14.1) und der zweite Teilstromrichter (5.2) gleichspannungsseitig an einen ersten und einen zweiten Anschluss (9.21; 9.22) eines zweiten Gleichspannungszwischenkreises (14.2) angeschlossen ist, oder
(S2) Anschliessen einer der beiden Gleichspannungszwischenkreise (14.1; 14.2) des Teilstromrichtersystems (5) an eine Netzgleichspannungsquelle (1) über einen Gleichspannungsnetzschalter (3), **gekennzeichnet durch** die weiteren Schritte,
(S1.2a) Schalten der Gleichspannungszwischenkreise (14.1; 14.2) des Teilstromrichtersystems (5) beim (S1) Anschluss der Stromrichterschaltung an die Netzwechselspannungsquelle derart, dass zwischen den Gleichspannungszwischenkreisen (14.1; 14.2) keine unmittelbare Verbindung besteht oder
(S2.2a) Schalten der Gleichspannungszwischenkreise (14.1; 14.2) des Teilstromrichtersystems (5) beim (S2) Anschluss der Stromrichterschaltung an die Netzgleichspannungsquelle (1) derart, dass zwischen den Gleichspannungszwischenkreisen (14.1; 14.2) eine unmittelbare Verbindung besteht.

11. Verfahren nach Anspruch 10, **gekennzeichnet durch** die weiteren Schritte
(S1; S1.2a) beim Anschluss der Stromrichterschaltung an die Netzwechselspannungsquelle (2) (S1.2b) Öffnen von zwischen dem ersten Anschluss (9.11) des ersten Gleichspannungszwischenkreises (14.1) und dem ersten Anschluss (9.21) des zweiten Gleichspannungszwischenkreises (14.2) und zwischen dem zweiten Anschluss (9.12) des ersten Gleichspannungszwischenkreises (14.1) und dem zweiten Anschluss (9.22) des zweiten Gleichspannungszwischenkreises (14.2) vorgesehenen Konfigurationsschaltern (10.1; 10.2) und
(S1.2b) Öffnen eines zwischen dem zweiten Anschluss (9.12) des ersten Gleichspannungszwischenkreises (14.1) und dem ersten Anschluss (9.21) des zweiten Gleichspannungszwischenkreises (14.2) vorgesehenen Trennschalters (11).

12. Verfahren nach Anspruch 10, **gekennzeichnet durch** die weiteren Schritte
(S2; S2.2a) beim Anschluss der Stromrichterschaltung an die Netzgleichspannungsquelle (1) und bei einer Netzgleichspannung (U_{g}) wesentlich grösser als die Nennzwischenkreisspannung (U_{d,N}) der Gleichspannungszwischenkreise (14.1; 14.2)
(S2.2b) Öffnen von zwischen dem ersten Anschluss (9.11) des ersten Gleichspannungszwischenkreises (14.1) und dem ersten Anschluss (9.21) des zweiten Gleichspannungszwischenkreises (14.2) und zwischen dem zweiten Anschluss (9.12) des ersten Gleichspannungszwischenkreises (14.1) und dem zweiten Anschluss (9.22) des zweiten Gleichspannungszwischenkreises (14.2) vorgesehenen Konfigurationsschaltern (10.1; 10.2) und (S2.2b) Schliessen eines zwischen dem zweiten Anschluss (9.12) des ersten Gleichspannungszwischenkreises (14.1) und dem ersten Anschluss (9.21) des zweiten Gleichspannungszwischenkreises (14.2) vorgesehenen Trennschalters (11).

13. Verfahren nach Anspruch 10, **gekennzeichnet durch** die weiteren Schritte
(S2; S2.2a) beim Anschluss der Stromrichterschaltung an die Netzgleichspannungsquelle (1) und bei einer Netzgleichspannung (U_{g}) in der Grössenordnung der Nennzwischenkreisspannung (U_{d,N}) der Gleichspannungszwischenkreise (14.1; 14.2)
(S2.2c) Schliessen von zwischen dem ersten Anschluss (9.11) des ersten Gleichspannungszwischenkreises (14.1) und dem ersten Anschluss (9.21) des zweiten Gleichspannungszwischenkreises (14.2) und zwischen dem zweiten Anschluss (9.12) des ersten Gleichspannungszwischenkreises (14.1) und dem zweiten Anschluss (9.22) des zweiten Gleichspannungszwischenkreises (14.2) vorgesehenen Konfigurationsschaltern (10.1; 10.2) und
(S2.2c) Öffnen eines zwischen dem zweiten Anschluss (9.12) des ersten Gleichspannungszwischenkreises (14.1) und dem ersten Anschluss (9.21) des zweiten Gleichspannungszwischenkreises (14.2) vorgesehenen Trennschalters (11).

14. Verfahren nach Anspruch 10, **gekennzeichnet durch** den weiteren Schritt
(S1) beim Anschluss der Stromrichterschaltung an die Netzwechselspannungsquelle (2) (S1.1) Speisen eines Hilfsbetriebestromrichters (8) **durch** die Netzwechselspannungsquelle (2) über den Transformator (7).

15. Verfahren nach Anspruch 10, **gekennzeichnet durch** den weiteren Schritt
(S2) beim Anschluss der Stromrichterschaltung an die Netzgleichspannungsquelle (1) (S2.1) Speisen eines Hilfsbetriebestromrichters (8) **durch** mindestens einen Teilstromrichter (5.1; 5.2).

16. Verfahren nach Anspruch 11 oder 12, **gekennzeichnet durch** den weiteren Schritt
bei fehlerhaften Schaltungselementen der Stromrichterschaltung (S1.2c; S2.2d) Abtrennen einer **durch** die fehlerhaften Schaltungselemente mittelbar und/oder unmittelbar gespeisten elektrischen Last (13).
